# EUROPÄISCHE PATENTSCHRIFT

(11) **EP 0 700 631 B1**
(45) Veröffentlichungstag und Bekanntmachung des Hinweises auf die Patenterteilung: **12.09.2001**
(21) Anmeldenummer: 94120040.4
(22) Anmeldetag: 17.12.1994
(51) Int. Cl.: A01B 1/14, A01B 1/06

(54) **Gerät für gärtnerische Bodenbearbeitungen**
Garden soil working apparatus
Appareil pour le travail du sol de jardin

(30) Priorität: 10.08.1994 DE 9412819 U; 18.08.1994 DE 9413329 U
(43) Veröffentlichungstag der Anmeldung: 13.03.1996
(73) Patentinhaber: Sandholzer, Hartwig, D-60388 Frankfurt (DE)
(72) Erfinder: Sandholzer, Hartwig, D-60388 Frankfurt (DE)
(74) Vertreter: Wolf, Günter, Dipl.-Ing.

(56) Entgegenhaltungen:
- DE-U- 9 413 329
- FR-A- 2 631 511
- US-A- 3 129 771
- US-A- 3 333 881

## Beschreibung

Die Erfindung betrifft einen Gabelspaten für gärtnerische Bodenbearbeitungen, bestehend aus einem mit einem Quergriff versehenen Stiel, an dessen unterem Ende das aus einem Schultersteg mit daran angeordneten Zinken gebildete Spatenblatt angeordnet ist.

Derartige Gabelspaten, die in der Regel vier oder fünf Zinken aufweisen, sind hinlänglich bekannt und in Benutzung, so daß es diesbezüglich keines besonderen druckschriftlichen Nachweises bedarf. Solche Gabelspaten können dabei zum einen wie Mist- oder Heugabeln benutzt werden, zum anderen aber auch wie Normalspaten, die bekanntlich per Fuß in den Boden eingestochen werden, was möglich ist, weil Schultersteg und Zinken wesentlich stabiler dimensioniert sind als Mist- oder Heugabeln. Zum wurzelschonenden Auflockern von Böden sind derartige Gabelspaten nicht oder nur schlecht geeignet, weil sie, wie gesagt, per Fuß in den Boden eingestochen werden müssen und der abgestochene Bodenteil wie mit einem Normalspaten umgestürzt wird. Um tatsächlcih eine Bodenauflockerung ohne Umstürzen des Bodens und ohne Fußbetätigung zu erreichen, sind Sondergeräte gewissermaßen als Hackenersatz entwickelt worden, mit denen durch einfaches Drehen des Stieles vom Quergriff aus die kreisförmig angeordneten, krallenförmigen Zinken in und durch den Boden gezogen werden. Hierzu wird auf den Gegenstand der EP-A-0264711 verwiesen. Nachteilig ist dabei, daß aufgrund ihrer Ausbildung beim Eindrehen in den Boden gewissermaßen ein Bohrkern entsteht, der je nach Bodenbeschaffenheit beim Herausheben oder beim entgegengesetzten Herausdrehen des Gerätes mit herausgehoben wird. Außerdem kann bei solchen Geräten praktisch nicht für das Eindringen in den Boden mit dem Fuß nachgeholfen werden, da dem die krallenartigen Zinken entgegenstehen.

Der Erfindung liegt die Aufgabe zugrunde, einen Gabelspaten der eingangs genannten Art dahingehend zu verbessern, daß dieser bei einfacher und trotzdem stabiler Konstruktion auch in schwere und feste Böden einbringbar ist, in Senkrechtprojektion gesehen der gesamte erfaßte Bodenbereich aufgelockert und damit eine Kernbildung weitestgehend vermieden wird.

Diese Aufgabe ist mit einem Gabelspaten der eingangs genannten Art nach der Erfindung durch die im Kennzeichen des Patentanspruches 1 angeführten Merkmale gelöst.

Ein solcher, erfindungsgemäß ausgebildeter und wie ein normaler Gabelspaten unter leichter Schrägstellung am Boden aufgesetzter Gabelspaten greift, vom Stielquergriff aus gedreht und erforderlichenfalls mit Fußunterstürtzung, unter vertikalem Vortrieb drehschneidend in den Boden ein, wobei aber gleichzeitig und von oben her beginnend der gesamte erfaßte Bodenbereich aufgelockert und eine Kernbildung vermieden wird. Ein solches Gerät ist zudem besonders einfach herstellbar, da von bisherigen Gabelspaten ausgegangen werden kann, deren Zinken lediglich nach der einen und anderen Seite in bezug auf die mittige Zinke auszubiegen sind.

Eine besonders vorteilhafte Ausführungsform besteht darin, daß zwischen den jeweils äußeren Paaren von Zinken pflugscharartige Schneidstege angeordnet sind. Ein solches Gerät hat sich für die Bodenauflockerung durch Drehbewegung sowohl für leichte als auch schwere Böden als außerordentlich leicht handhabbar erwiesen und kann auch leicht wieder aus dem Boden herausgehoben werden, wobei der gesamte, in Projektion gesehen, erfaßbare Bodenbereich pflugscharartig aufgebrochen wird.

Nach der US-A-3,129,771 ist zwar ein ähnliches Bodenbearbeitungsgerät bekannt, hierbei handelt es sich aber nicht um einen Gabelspaten, sondern letztlich um ein nur zweizinkiges Bohrwerkzeug mit einem relativ tief in den Boden einzustechenden, mittigen Führungszapfen als Vorsatzgerät für eine handelsübliche Bohrmaschine, wobei das ganze Gerät senkrecht auf dem Boden aufgesetzt wird. Die geraden, d.h., die beiden ungebogen, entgegengesetzt geneigten Zinken stehen dabei im Grunde einem, von den Zinken her gesehen, selbsttätigen Ein- und Vortrieb in den Boden entgegen.

Der erfindungsgemäße Gabelspaten wird nachfolgend anhand der zeichnerischen Darstellung eines Ausführungsbeispieles näher erläutert.

Es zeigt schematisch
- Fig. 1: den erfindungsgemäßen Gabelspaten in Vorderansicht;
- Fig. 2: den Gabelspaten gemäß Fig. 1 in Seitenansicht;
- Fig. 3: den Verlauf der Linien L und L1 in Draufsicht;
- Fig. 4: zum Vergleich einen herkömmlichen Gabelspaten in Seitenansicht und
- Fig. 5: einen Schnitt durch eine Zinke längs Linie V-V in Fig. 1.

Der Gabelspaten besteht wie bisher auch schon aus einem mit einem Quergriff Q versehenem Stiel S, an dessen unterem Ende das aus einem Schultersteg 3 mit daran angeordneten Zinken 1 gebildete Spatenblatt angeordnet ist.

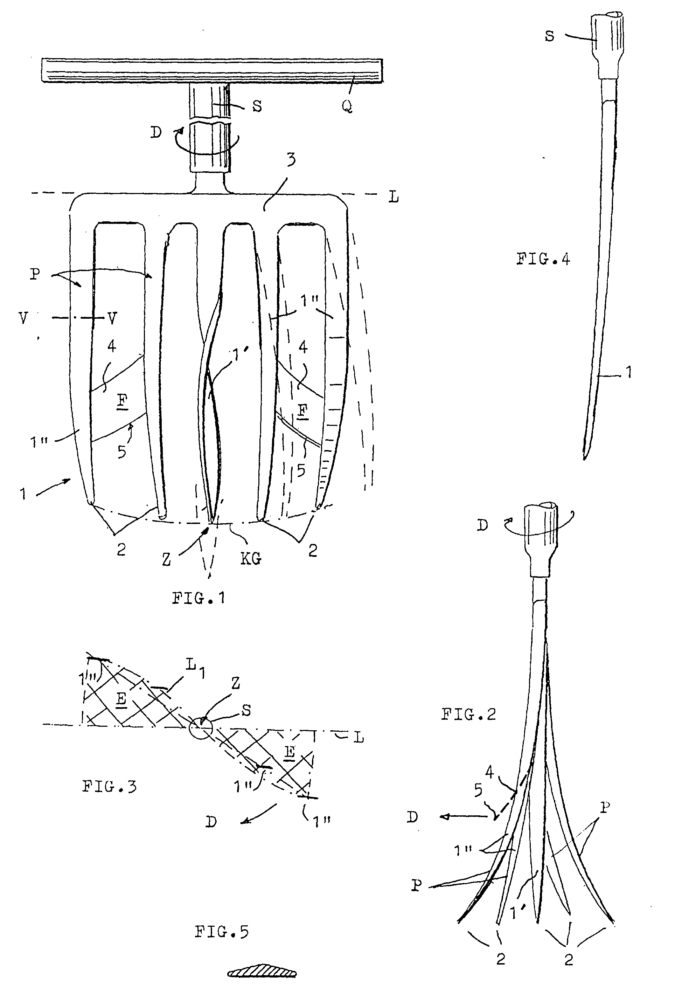

Für einen solchen Gabelspaten ist nun wesentlich und wie aus Fig. 1, 2 ersichtlich, daß die Zinken 1 des Spatenblattes bis auf eine mittlere Zinke 1' aus der sich durch den Schultersteg 3 erstreckenden Blattebene, vom Zentrum Z aus gesehen, entgegengesetzt nach beiden Seiten der Blattebene derart herausgebogen sind, daß die Zinkenspitzen 2 auf einer zur Linie L des Schultersteges 3 winklig versetzten geraden oder s-förmig gebogenen Linie L1 enden.
Dargestellt ist in den Fig. 1, 2 die bevorzugte Ausführungsform mit voll ausgezogenen Linien. Was der Verlauf der Linien L und L₁, betrifft, auf denen die Zinkenspitzen 2 enden, wird auf Fig. 3 verwiesen, wonach die Linie L₁, flach s-förmig verläuft.

Von einem üblichen Gabelspaten-Rohling ausgehend (siehe Fig. 4), der gleichlange Zinken 1 hat, sind die Endbereiche der Linie L₁ sich aus der Darstellungsebene heraushebend vorzustellen. Ein nicht aufgebogener Verlauf der Linie L₁, wie in Fig. 2 dargestellt, ergäbe sich nur dann, wenn die Zinken 1 bzw. 1" von innen nach außen längerwerdend ausgebildet sind.

Vorteilhaft und wie aus Fig. 1 ersichtlich, ist die mittlere, im Zentrum Z angeordnete Zinke 1' in sich verdrillt und die beidseitig benachbarten Zinken 1" sind winklig angestellt, was, da schwer darstellbar, nicht besonders verdeutlicht ist. Diese winklige Anstellung orientiert sich dabei nach der Drehung D des Quergriffes Q gemäß Fig. 1. Vorteilhaft ist ferner der mittlere Zinken 1' über das Zentrum Z der Linie L₁, hinaus verlängert, was in Fig. 1 gestrichelt angedeutet ist. Ebenfalls ist gestrichelt in Fig. 1 angedeutet, daß die beidseitig zur mittleren Zinke 1' angeordneten Zinken 1", vom Zentrum her gesehen, zunehmend nach außen abgespreizt ausgebildet sein können, was ebenfalls möglich ist.

Für den Auflockerungseffekt beim Eindrehen des Gerätes hat sich eine Ausführungsform als besonders günstig erwiesen, bei der zwischen den jeweils äußeren Paaren P von Zinken 1" pflugscharartige Schneidstege 4 angeordnet sind (siehe ebenfalls Fig. 1). Mit ihren Flächen erstrecken sich diese mit Schneidkante 5 versehenen Stege 4 ebenfalls in der Verw indungsebene, in der sich auch die Zinken 1" erstrecken.

Stark vergrößert ist in Fig. 5 ein Querschnitt gemäß Linie V-V in Fig. 1, der zinken 1" dargestellt, wie er bei herkömmlichen Gabelspaten üblich ist, hier aber bevorzugt zur Anwendung kommt. Abgesehen davon können alle schneidenden Kanten geschärft ausgebildet sein, und es ist auch möglich, die Schneidstege 4, wie dies in Fig. 2 gestrichelt angedeutet ist, aus der Verwindungsebene der Zinken herausragen zu lassen. Die Anordnung der Spitzen 2 auf der Linie L₁, egal ob sich diese in einer Horizontalebene erstreckt oder in einer nach oben offenen Kugelebene KG, bedeutet, und das ist entscheidend, daß die Zinken 1" bzw. Zinkenpaare P auf beiden Seiten der mittleren Zinke 1' jeweils entgegengesetzt ausgebogen sind, wie dies insbesondere Fig. 2 verdeutlicht.

## Patentansprüche

1. Gabelspaten für gärtnerische Bodenbearbeitungen, bestehend aus einem mit Quergriff (Q) versehenen Stiel(S), an dessen unterem Ende das aus einer Spatenschulter (3) mit daran angeordneten, Bodenauflockerungselemente bildenden Zinken (1) gebildete Spatenblatt angeordnet ist,
**dadurch gekennzeichnet,**
**daß** die beidseitig neben einer mittigen Zinke (1') angeordneten, das Spatenblatt bildenden Zinken (1) jeweils entgegengesetzt aus der von Spatenschulter (3) und mittlerer Zinke (1') definierten Blattebene in Drehrichtung (D) des Gabelspatens derart herausgebogen sind, daß die Zinkenspitzen (2) der gebogenen Zinken (1) auf einer zur Linie (L) der Spatenschulter (3) winklig versetzten geraden oder s-förmig gebogenen Linie (L₁) enden.

2. Gabelspaten nach Anspruch 1,
**dadurch gekennzeichnet,**
**daß** die mittlere, im Zentrum (Z) angeordnete Zinke (1') in sich verdrillt ist und die beidseitig benachbarten Zinken (1") winklig angestellt sind.

3. Gabelspaten nach Anspruch 1 oder 2,
**dadurch gekennzeichnet**,
daß die mittlere Zinke (1') über das Zentrum (Z) der Linie (L₁) hinaus verlängert ist.

4. Gabelspaten nach einem der Ansprüche 1 bis 3
**dadurch gekennzeichnet,**
**daß** die beidseitig zur mittleren Zinke (1') angeordneten Zinken (1"), vom Zentrum her gesehen, zunehmend nach außen abgespreizt sind.

5. Gabelspaten nach einem der Ansprüche 1 bis 4,
**dadurch gekennzeichnet,**
**daß** zwischen den jeweils äußeren Paaren (P) von Zinken (1") pflugscharartige Schneidstege (4) angeordnet sind.

## Claims

1. A fork-type spade for horticultural soil treatment, comprising a stick (S) provided with a transverse handle (Q), at the bottom end of which stick (S) is arranged the spade blade formed of a spade shoulder (3) including forks (1) forming soil mellowing elements provided on the said shoulder,
**characterized in**
**that** the forks (1) arranged on both sides next to a central fork (1') and forming the spade blade are bent in respectively opposite directions out of the blade plane defined by the spade shoulder (3) and the central fork (1') in the turning direction (D) of the fork spade in such a way that the fork tips (2) of the bent-off forks (1) terminate on a straight or s-shaped line (L₁) in angularly staggered relationship to the line (L) of the spade shoulder (3).

2. A fork spade according to claim 1,
**characterized in**
**that** the central fork (1') arranged in the center (Z) is twisted in itself and that the both-sidedly neighbouring forks (1") are angularly projecting.

3. A fork spade according to claims 1 or 2,
**characterized in**
**that** the central fork (1') is extended beyond the center (Z) of line (L₁).

4. A fork spade according to any one of claims 1 to 3,
**characterized in**
**that** the forks (1") arranged on both sides of the central fork (1'), viewed from the center, are incrementally spreading toward the outside.

5. A fork spade according to any one of claims 1 to 4,
**characterized in**
**that** ploughshare-type cutting bridges (4) are provided between the respectively outer pairs (P) of forks (1").

## Revendications

1. Bêche à fourche pour travaux du sol et de jardinage comprenant un manche (S) pourvu d'une poignée transversale (Q) à l'extrémité inférieure de laquelle est placée la pelle de la bêche formée par un épaulement de bêche (3) avec des dents (1) placées sur celui-ci formant des éléments pour ameublir le sol,
**caractérisée en ce**
**que** les dents (1) qui forment la pelle de la bêche qui sont placées des deux côtés à côté d'une dent centrale (1') sont recourbées respectivement en sens opposé à partir du plan de la pelle dénifi par l'épaulement de la bêche (3) et la dent centrale (1') dans le sens de rotation (D) de la bêche à fourche de telle manière que les pointes des dents (2) des dents recourbées (1) se terminent sur une ligne (L₁) droite décalée angulairement par rapport à la ligne (L) de l'épaulement de la bêche (3) ou sur une ligne (L₁) recourbée en forme de S.

2. Bêche à fourche selon la revendication 1,
**caractérisée en ce**
**que** la dent du milieu (1') placée au centre (Z) est torsadée en elle-même et les dents voisines des deux côtés (1") sont placées en formant un angle.

3. Bêche à fourche selon la revendication 1 ou 2,
**caractérisée en ce**
**que** la dent du milieu (1') est prolongée au-delà du centre (Z) de la ligne (L₁).

4. Bêche à fourche selon l'une des revendications 1 à 3,
**caractérisée en ce**
**que** les dents (1") placées des deux côtés de la dent du milieu (1') sont écartées de plus en plus vers l'extérieur, ceci étant vu à partir du centre.

5. Bêche à fourche selon l'une des revendications 1 à 4,
**caractérisée en ce**
**que** des barrettes tranchantes de type soc de charrue (4) sont placées entre les paires (P) respectivement extérieures de dents (1").
